# EUROPÄISCHE PATENTSCHRIFT

(11) **EP 0 789 148 B1**
(45) Veröffentlichungstag und Bekanntmachung des Hinweises auf die Patenterteilung: **05.09.2001**
(21) Anmeldenummer: 97101319.8
(22) Anmeldetag: 29.01.1997
(51) Int. Cl.: F04D 29/02, F04D 29/08, F04D 29/52, B29C 45/16

(54) **Verfahren zum Herstellen eines Ventilatorgehäuses im Kunststoff-Spritzverfahren sowie Gehäuse für einen Ventilator**
Injection-moulding fabrication method of a fan housing and housing for a fan
Procédé de fabrication pour moulage par injection d'un boîtier d'un ventilateur et boîtier pour un ventilateur

(30) Priorität: 08.02.1996 DE 19604530
(43) Veröffentlichungstag der Anmeldung: 13.08.1997
(73) Patentinhaber: MAICO ELEKTROAPPARATE-FABRIK GmbH, D-78056 Villingen-Schwenningen (DE)
(72) Erfinder: Busch, Norbert, 78112 St. Georgen (DE); Bolli, Alfred, 78054 VS-Schwenningen (DE); Heger, Michael, Dipl.-Ing., Produktmanager, 78054 VS-Schwenningen (DE); Kaiser, Kurt, 78050 VS-Villingen (DE); Kirchner, Jürgen, Dipl.-Ing. (FH), 78056 VS-Schwenningen (DE); Schmider, Jürgen, 78078 Niedereschach (DE); Schwald, Dieter, 78073 Bad Dürrheim (DE)
(74) Vertreter: Grosse, Rainer, Dipl.-Ing.

(56) Entgegenhaltungen:
- EP-A- 0 600 634
- DE-U- 8 903 230
- DE-U- 9 316 979
- FR-A- 2 530 299
- FR-A- 2 620 077
- US-A- 4 865 517

## Beschreibung

Die Erfindung betrifft ein Verfahren zum Herstellen eines Ventilatorgehäuses im Kunststoff-Spritzverfahren.

Es ist bekannt, Ventilatorgehäuse aus Kunststoff zu erstellen. Dies erfolgt bevorzugt im Kunststoff-Spritzverfahren. Je nach konstruktivem Aufwand der Spritzform ist es möglich, selbst komplizierte Konturen einstückig zu erstellen, bei denen beispielsweise gleich bei der Herstellung Aufnahmeschlitze für Dichtgummis, Schraubenlöcher und auch Kabeldurchführungen ausgebildet werden. Ist das Gehäuse hergestellt, so werden die Dichtungen eingesetzt, insbesondere eingeklippst, und auch gegebenenfalls vorgesehene Schraubenloch-Ausfüllungen und Kabeldurchführungs-Ausfüllungen eingesetzt, um die vorhandenen Löcher zu schließen. Dichtungen, Schraubenloch-Ausfüllungen und Kabeldurchführungs-Ausfüllungen bestehen vorzugsweise aus einem weichen Kunststoff und dienen dazu, das Ventilatorgehäuse möglichst dicht -wegen im Gehäuseinneren untergebrachter elektrischer Teile- zu schließen, um beispielsweise eine Spritzwasserdichtigkeit anzustreben.

Durch das Einsetzen beziehungsweise Einklipsen von Dichtungen können Spaltbereiche zwischen Gehäuse und Dichtung entstehen, so daß eine ausreichende Abdichtung in Frage steht.

Aus dem deutschen Gebrauchsmuster DE 93 16 979 U geht die Herstellung einer Leuchtenwanne hervor, die in einer ersten Phase aus einem relativ festen Kunststoff (Polymer) erstellt wird. Zur Abdichtung wird ein Weichteil (Elastomer) in einer zweiten Phase angespritzt.

Das vorstehend erwähnte Verfahren zum Herstellen des Ventilatorgehäuses ist relativ aufwendig; es soll vereinfacht und sicherer hinsichtlich der Abdichtung werden.

Erfindungsgemäß ist vorgesehen, daß an das aus einem ersten, relativ festen Kunststoff gespritzte Ventilatorgehäuse ein zweiter, elastisch nachgiebiger Kunststoff zur Ausbildung mindestens eines Weichteils mittels eines Zweikomponenten-Spritzverfahrens angespritzt wird, bei dem in einem Arbeitsgang mit einem Werkzeug beide Spritzvorgänge durchgeführt werden. Demgemäß wird das Weichteil, das beispielsweise eine Dichtung oder eine Schraubenloch-Ausfüllung beziehungsweise eine Kabeldurchführungs-Ausfüllung bildet, nicht als separat erstelltes Kunststoffteil an dem Ventilatorgehäuse durch Einsetzen, Einklippsen, Ankleben oder dergleichen angebracht, sondern es wird angespritzt, also ebenfalls im Kunststoff-Spritzverfahren erstellt, wobei ein elastisch nachgiebiger Kunststoff zum Einsatz kommt. Hierdurch entfallen Montagearbeiten des Weichteils und überdies ist ein fester und auch dichter Sitz am Ventilatorgehäuse sichergestellt. Dadurch ist eine Spaltbindung -wie im Stand der Technik bereits erwähnt- vermieden, wodurch sich eine optimale Abdichtfunktion zum Schutz der sich im Inneren des Gehäuses befindenden elektrischen Bauteile sogar gegenüber Strahlwasser ergibt. Es kommt ein Zweikomponenten-Spritzverfahren zum Einsatz, bei dem in einem Arbeitsgang mit einem Werkzeug beide Spritzvorgänge durchgeführt werden. Der eine Spritzvorgang wird mit dem relativ festen Kunststoff zur Herstellung des Ventilatorgehäuses selbst und der zweite Spritzvorgang mit dem elastischen Kunststoff zur Ausbildung des Weichteils durchgeführt. Die beiden Spritzvorgänge erfolgen fast zeitgleich, so daß eine sehr schnelle und effektive Fertigung möglich ist.

Nach einer Weiterbildung der Erfindung ist vorgesehen, daß als Weichteil mindestens eine Dichtung und/oder eine Schraubenloch-Ausfüllung und/oder eine Kabeldurchführungs-Ausfüllung angespritzt wird.

Die Erfindung betrifft ferner ein Gehäuse für einen Ventilator mit einem Grundgehäuse und einer mindestens eine Lufteintritts- oder Luftaustrittsöffnung aufweisenden Abdeckung, wobei Grundgehäuse und Abdeckung im Kunststoff-Spritzverfahren hergestellt sind und an Grundgehäuse und/oder Abdeckung in einem weiteren Spritzverfahren mindestens ein Kunststoff-Weichteil als Dichtung und/oder Schraubenloch-Ausfüllung und/oder Kabeldurchführungs-Ausfüllung durch ein Zweikomponenten-Spritzverfahren angespritzt ist. Dieses Gehäuse weist die bereits vorstehend erwähnten Vorteile auf.

Insbesondere ist vorgesehen, daß die Abdeckung eine Frontplatte aufweist, von der ein abgewinkelter, umlaufender Rand ausgeht, der eine umlaufende Seitenwandung des Grundgehäuses beim Zusammenstecken von Abdeckung und Grundgehäuse überfängt, wobei an der Innenseite des Randes und/oder an der Außenseite der Seitenwandung die Dichtung angespritzt ist, deren freie Endkante quer, insbesondere senkrecht, zur Zusammensteckrichtung von Abdeckung und Grundgehäuse verläuft. Eine auf diese Art und Weise hergestellte und angeordnete Dichtung übt eine optimale Dichtwirkung aus, da sie -etwa mit einem Wischerblatt vergleichbar- mit ihrer freien Endkante das sich an ihr abstützende Bauteil abdichtet. Da die Dichtung selbst an ihrem Fuße an das andere Bauteil angespritzt ist, ist auch der Befestigungsbereich der Dichtung optimal gegen Feuchtigkeit und dergleichen abgedichtet

Vorzugsweise ist vorgesehen, daß die Lufteintritts- oder die Luftaustrittsöffnung der Abdeckung und/oder ein ihr zugeordneter Luftkanal des Grundgehäuses von einer angespritzten Dichtung umrahmt ist, deren freie Endkante in Zusammensteckrichtung weist. Werden somit Grundgehäuse und Abdeckung bei der Montage zusammengesteckt, so tritt die freie Endkante der Dichtung in der Endphase der Zusammensteckbewegung gegen das entsprechend andere Teil und kann auf diese Art und Weise eine sehr gute Dichtwirkung entfalten. Insbesondere befindet sich die Dichtung auf einer Stirnseite einer Luftkanalwandung. Die Luftkanalwandung ist bevorzugt am Grundgehäuse ausgebildet, wobei in dem Luftkanal das Laufrad des Ventilators angeordnet ist.

Schließlich ist es vorteilhaft, wenn das Grundgehäuse einen zentralen Aufnahmeschacht für einen Elektromotor aufweist, der mittels eines aufsteckbaren Deckels verschlossen ist, wobei an der Innenwand des Aufnahmeschachtes und/oder an dem Seitenrand des Deckels eine Dichtung angespritzt ist, deren freie Endkante quer, insbesondere senkrecht, zur Steckrichtung des Deckels verläuft.

Die Zeichnung veranschaulicht die Erfindung anhand eines Ausführungsbeispiels, und zwar zeigt:
- Figur 1: eine perspektivische Ansicht eines Grundgehäuses eines Ventilatorgehäuses mit -in Explosionsdarstellung- abgenommenem Deckel eines Aufnahmeschachtes,
- Figur 2: eine Frontansicht auf das Grundgehäuse der Figur 1 mit abgenommenem Deckel,
- Figur 3: eine Rückansicht des Gehäuses der Figur 1,
- Figur 4: eine perspektivische Rückansicht einer Abdeckung, die -in montiertem Zustand des Ventilatorgehäuses- auf das Grundgehäuse der Figur 1 aufgesteckt und dort mit geeigneten Befestigungsmitteln gehalten ist,
- Figur 4a: eine Schnittansicht einer nutartigen Vertiefung entlang der Linie II - II gemäß Figur 4.
- Figur 5: eine schematische, geschnittene Seitenansicht des Ventilatorgehäuses in montiertem Zustand,
- Figur 6: eine Schnittdarstellung des Deckels,
- Figur 7: eine Schnittansicht des Deckels, der den Aufnahmeschacht verschließt,
- Figur 8 bis 15: Schnittdarstellungen von verschiedenen Ausführungsformen von Dichtungen, die am Ventilatorgehäuse angeordnet sind.

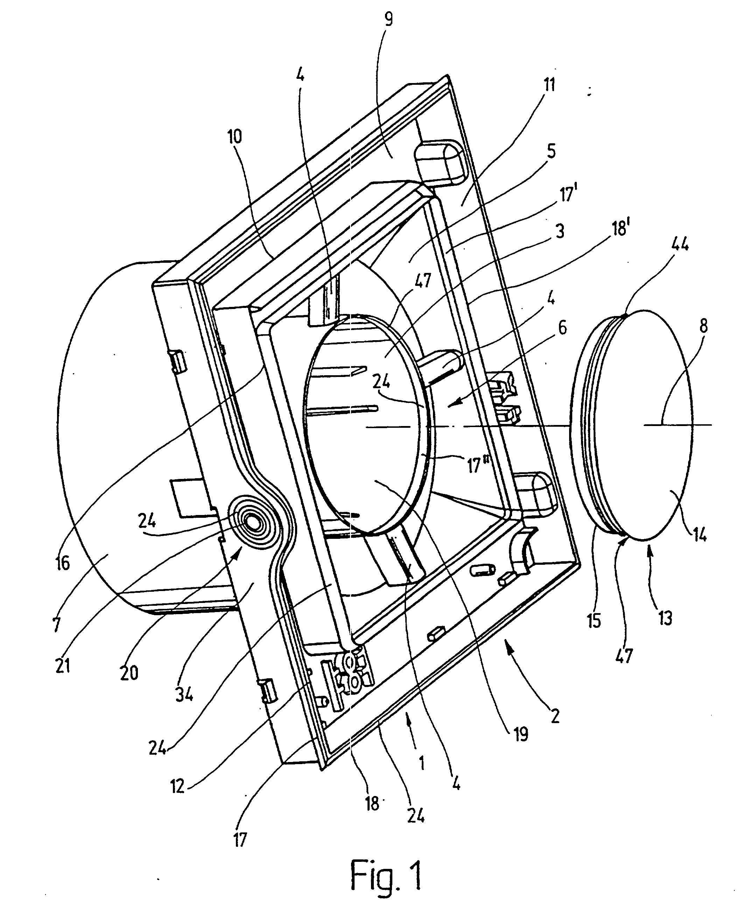

Die Figur 1 zeigt ein Grundgehäuse 1 eines Ventilatorgehäuses. Das Grundgehäuse 1 ist aus einem relativ festen Kunststoff 2 im Kunststoff-Spritzverfahren hergestellt. Es weist einen zentralen kreisförmigen Aufnahmeschacht 3 für einen nicht dargestellten Elektromotor auf, der über Kunststoffstege 4 an einer Luftkanalwandung 5 gehalten ist und der mittels eines Deckels 13 verschließbar ist. Der so ausgebildete Luftkanal 6 dient der Aufnahme eines nicht dargestellten Lüfterrades, das von dem erwähnten Elektromotor angetrieben wird. Der Luftkanal 6 setzt sich nach hinten in einen Rohransatz 7 fort. Die Luftkanalwandung 5 verläuft parallel zu einer Mittelachse 8, die den Aufnahmeschacht 3 durchsetzt. Die Luftkanalwandung 5 ist umlaufend ausgebildet, insbesondere nach Art eines rechteckigen oder quadratischen Rahmens. Rechtwinklig zur Mittelachse 8 verläuft -vom Fuße 10 der Luftkanalwandung 5 ausgehend- ein Boden 9 des Grundgehäuses 1. Von diesem geht randseitig eine umlaufende Seitenwandung 11 aus, die eine Stirnseite 12 besitzt. Die Flächennormale der Stirnseite 12 und die Flächennormale der Stirnseite 16 der Luftkanalwandung 5 verlaufen parallel zur Mittelachse 8.

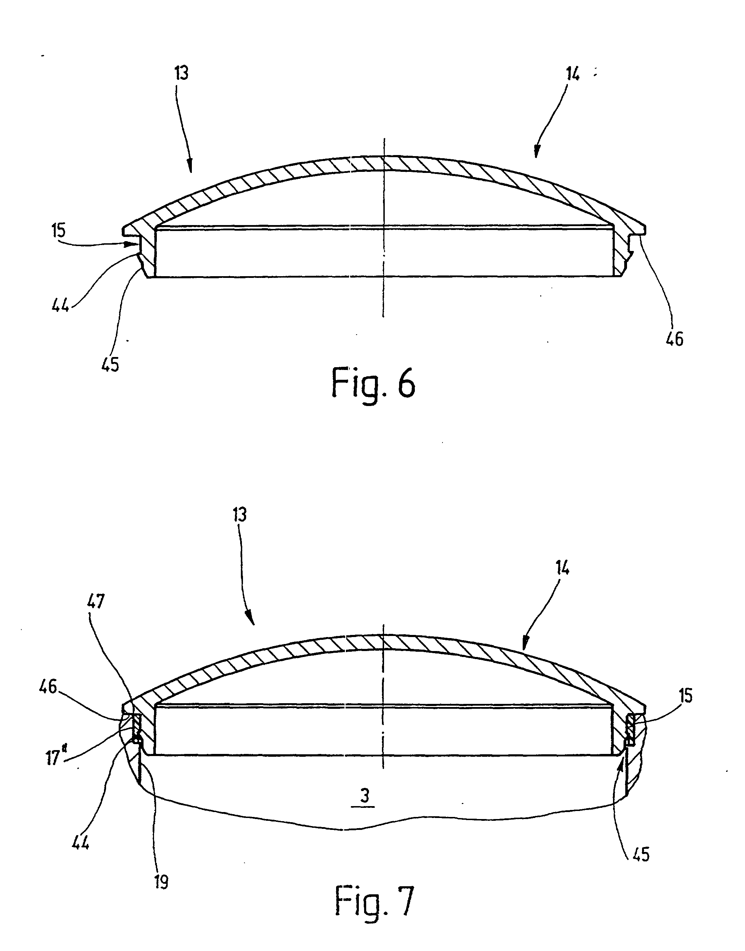

Der im Querschnitt kreisförmige Aufnahmeschacht 3 ist mittels eines Deckels 13 verschließbar. Der Deckel 13 weist eine Deckelplatte 14 sowie einen senkrecht zur Ebene der Deckelplatte 14 verlaufenden Seitenrand 15 auf. In Figur 6 ist der Deckel 13 in einer Schnittdarstellung gezeigt und Figur 7 zeigt den montierten Deckel 13 im Aufnahmeschacht 3. Am Seitenrand 15 des Deckels 13 ist ein umlaufender und in radialer Richtung nach außen weisender Wulst 44 angeordnet. Dieser ist in seinen Maßen derart ausgebildet, daß beim Einschieben des Deckels 13 in den Aufnahmeschacht 3 die Dichtung 17'' - im Bereich des Wulstes 44- stärker komprimiert wird als im übrigen Bereich der Anlagefläche des Seitenrandes 15 an die Dichtung 17''. Dadurch ergibt sich eine optimale Abdichtung des Aufnahmeschachtes 3. Die Anfasung 45 im unteren Bereich des Seitenrandes 15 ist zum besseren Ansetzen und Einschieben des Deckels 13 in den Aufnahmeschacht 3 vorgesehen.

In Figur 7 ist der montierte Deckel 13 gezeigt, wobei deutlich wird, daß der Deckel 13 mit der Unterseite 46 der Deckelplatte 14 satt auf der Stirnseite 47 beziehungsweise der Dichtung 17'' des Aufnahmeschachtes 3 aufliegt.

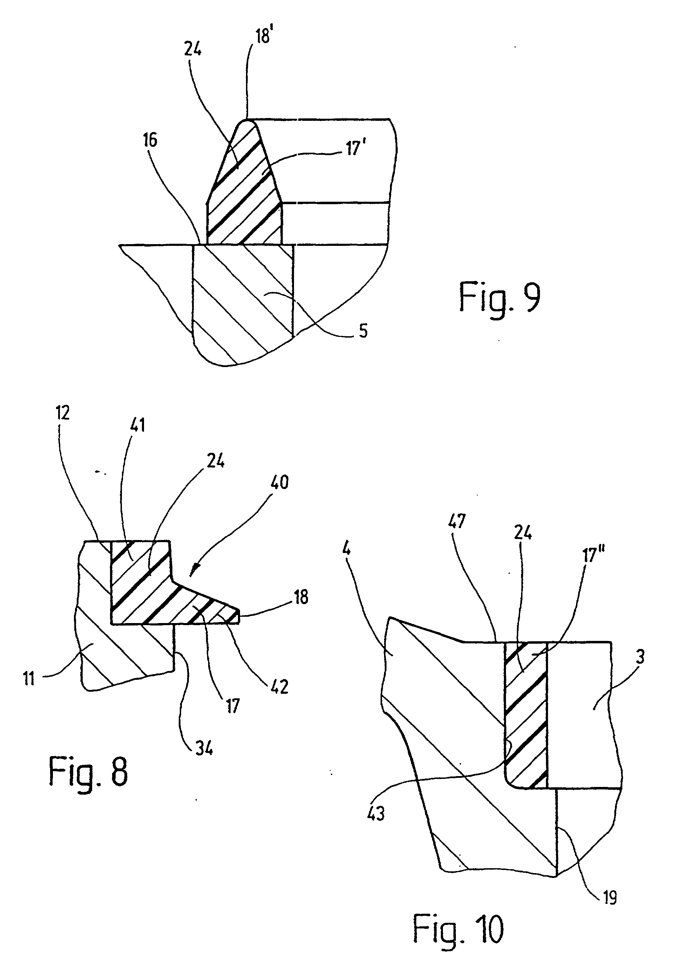

In Figur 8 ist gezeigt, daß an die Außenseite 34 der Seitenwandung 11 des Grundgehäuses 1 eine Dichtung 17 umlaufend angespritzt ist, die im Querschnitt gesehen als ein Winkelstück 40 ausgebildet ist, wobei der eine Schenkel 41 in Richtung der Mittelachse 8 weist und der andere Schenkel 42 in radialer Richtung zur Mittelachse 8 angeordnet ist. Der radiale Schenkel 42 weist eine freie Endkante 18 auf, die über die Außenseite 34 der Seitenwandung 11 hinausragt. Die Dichtung 17 befindet sich im Bereich des freien Endes der Seitenwandung 11, vorzugsweise angrenzend an die Stirnseite 12.

Auf der Stirnseite 16 der Luftkanalwandung 5 ist eine weitere Dichtung 17' angespritzt, die in Figur 9 näher dargestellt ist. Im Querschnitt betrachtet, weist die Dichtung 17' eine in Axialrichtung weisende kegelähnliche Form auf, wobei im Spitzenbereich des Kegels eine abgerundete Endkante 18' angeordnet ist. Ferner ist eine Dichtung 17'' an eine umlaufende Vertiefung 43 in der Innenwand 19 des Aufnahmeschachtes 3 angespritzt. Diese Anordnung der Dichtung 17'' ist deutlich aus der Figur 10 zu entnehmen. Im Querschnitt betrachtet weist die Dichtung 17'' eine Rechteckform auf.

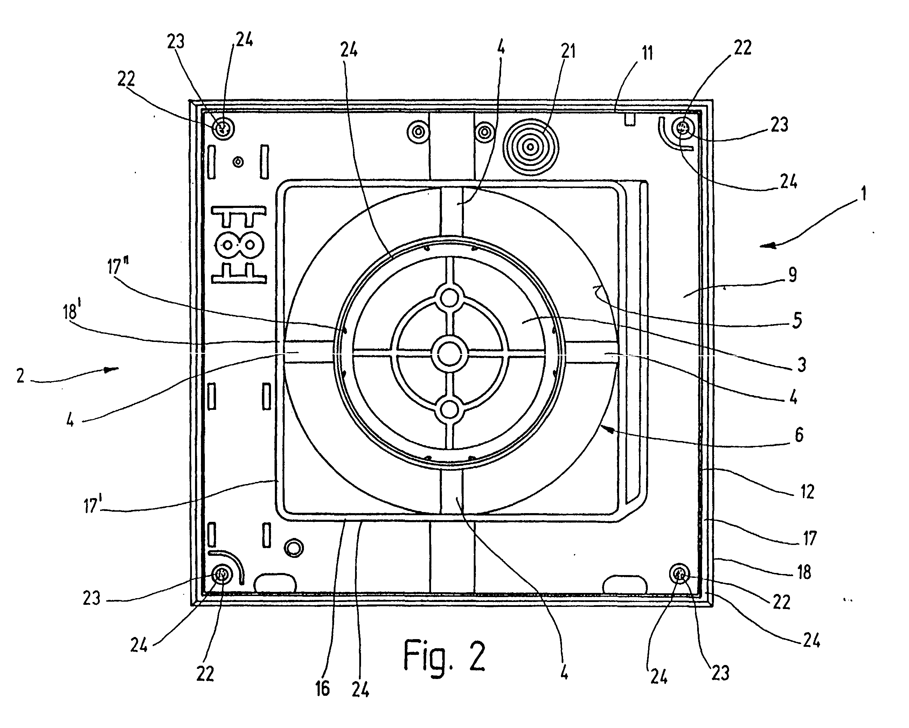

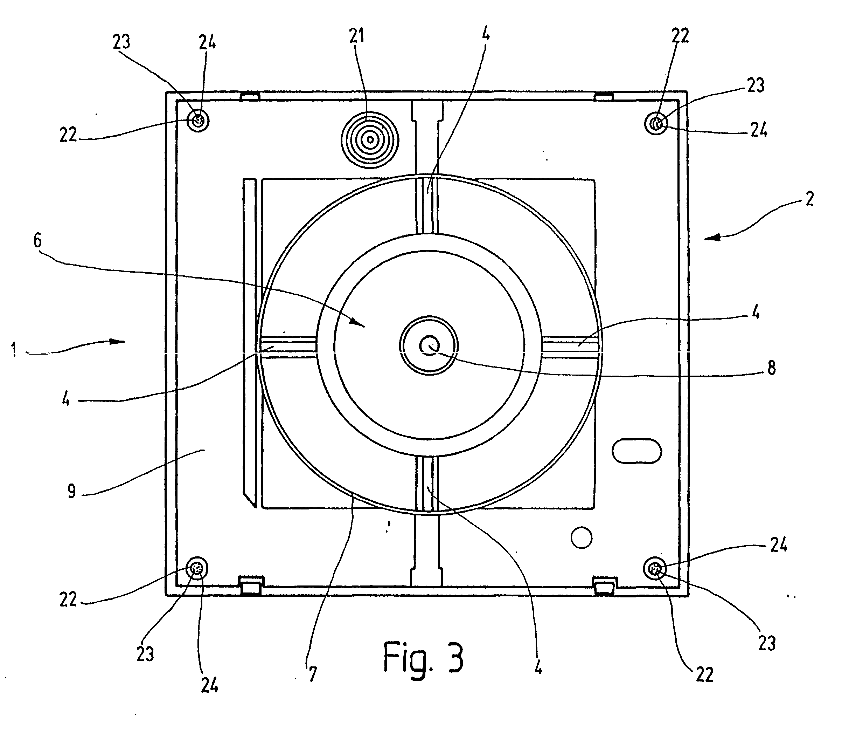

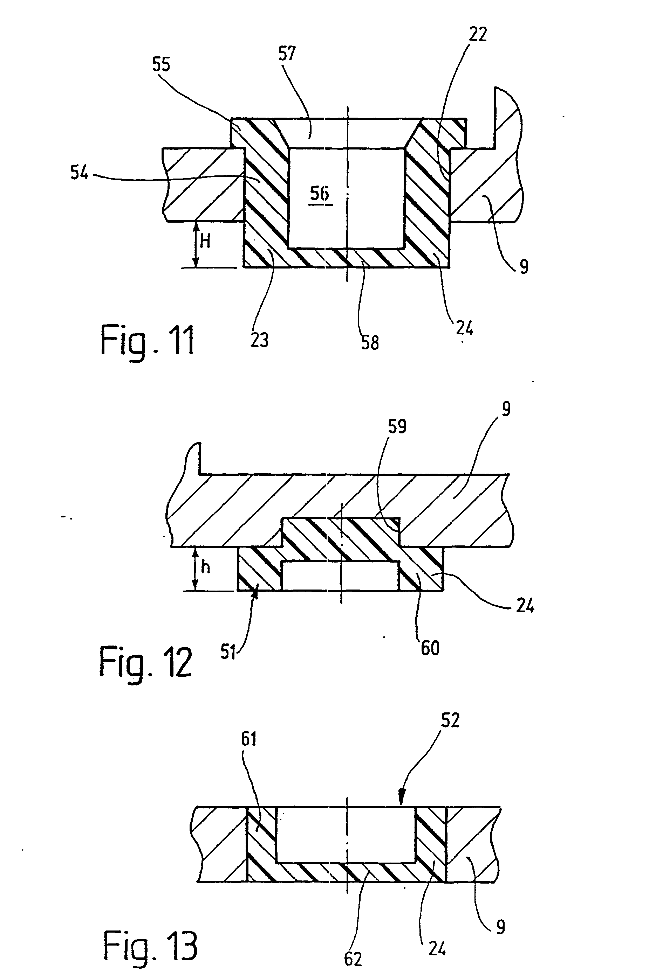

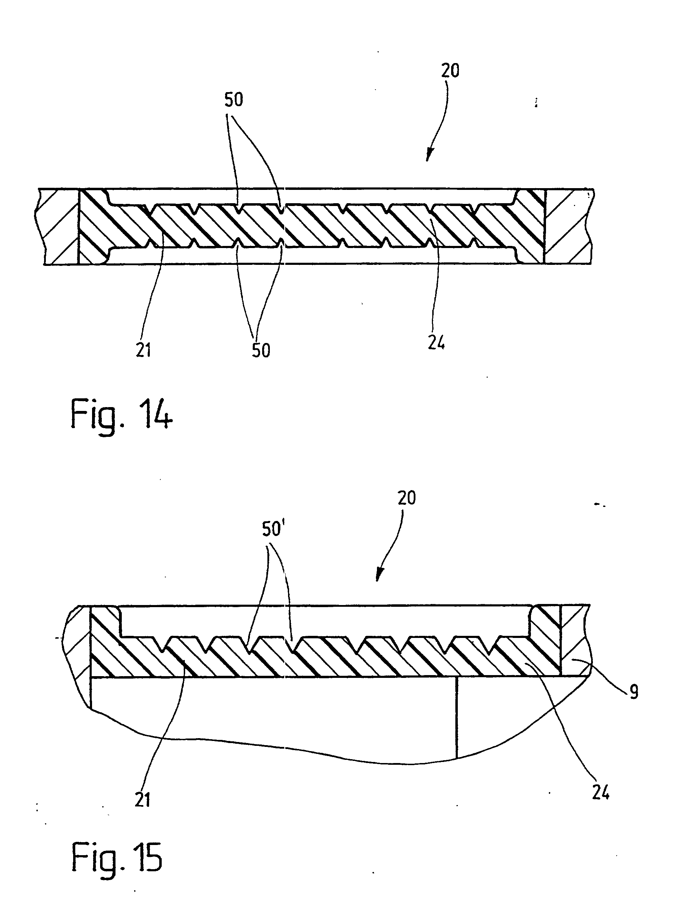

Die Seitenwandung 11 wird von einer Kabeldurchführung 20 durchsetzt, die mittels einer Kabeldurchführungs-Ausfüllung 21 verschlossen ist und deren Querschnittsform in Figur 15 gezeigt ist. Der Boden 9 (Figuren 2,3) wird von mehreren Schraubenlöchern 22 durchsetzt, die von Schraubenloch-Ausfüllungen 23 verschlossen sind, die in einer detaillierteren Schnittdarstellung in der Figur 11 gezeigt sind.

Die Dichtungen 17, 17' und 17'' sowie die Kabeldurchführungs-Ausfüllung 21 und die Schraubenloch-Ausfüllungen 23 bestehen aus einem elastisch nachgiebigen Kunststoff 24, der in einem Kunststoff-Spritzverfahren auf das Grundgehäuse 1 aufgebracht wird. Besonders bevorzugt ist die Durchführung eines Zweikomponenten-Spritzverfahrens, bei dem in einem Arbeitsgang mit einem Werkzeug der Kunststoff 2 und dann der Kunststoff 24 gespritzt werden, so daß quasi ein einteiliges Grundgehäuse 1 entsteht, wobei unter "einteilig" nicht nur das einstückig aus dem Kunststoff 2 hergestellte Grundgehäuse, sondern auch die aus dem elastischen Kunststoff 24 hergestellten Teile zu verstehen sind.

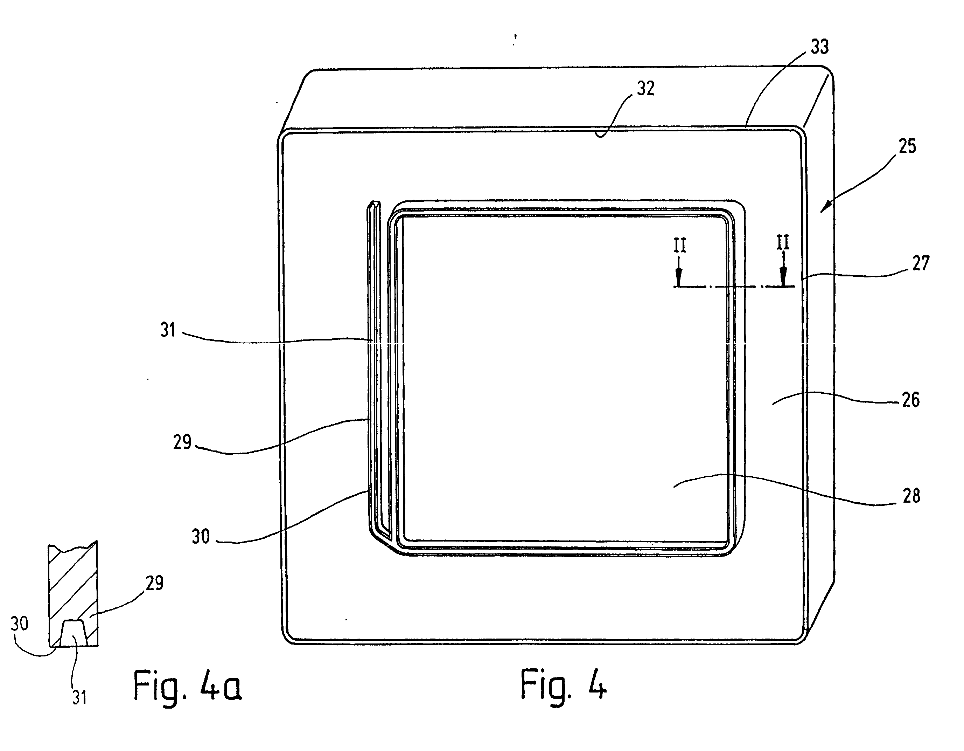

Die Figur 4 zeigt eine Abdeckung 25, die auf das Grundgehäuse 1 bei der Montage des Ventilatorgehäuses aufsteckbar ist. Die Abdeckung 25 ist in der Figur 4 von ihrer Rückseite her dargestellt, die im montierten Zustand dem Boden 9 zugekehrt ist. Sie weist eine Frontplatte 26 auf, die mit einem abgewinkelten, umlaufenden Rand 27 versehen ist. Ferner wird die Abdeckung 25 von einer Luftaustrittsöffnung 28 durchsetzt, deren Kontur der Kontur des Luftkanals 6 des Grundgehäuses 1 entspricht. Die Luftaustrittsöffnung 28 wird von einer umlaufenden Wandung 29 berandet. Die Wandung 29 weist an ihrer Stirnseite 30 eine umlaufende, nutartige Vertiefung 31 auf und 29 verläuft parallel zum jeweils benachbarten Bereich des Randes 27. Die Ausgestaltung der nutartigen Vertiefung 31 ist in einer Schnittdarstellung -entlang der Linie II - II in Figur 4- in Figur 4a dargestellt. Im Querschnitt betrachtet weist die Vertiefung 31 eine Kegelstumpf-Form auf. Die Vertiefung 31 ist in ihren Maßen derart ausgestaltet, damit sie -wie nachstehend näher erläutert wird- die Dichtung 17' zum sicheren Abdichten in sich aufnehmen kann.

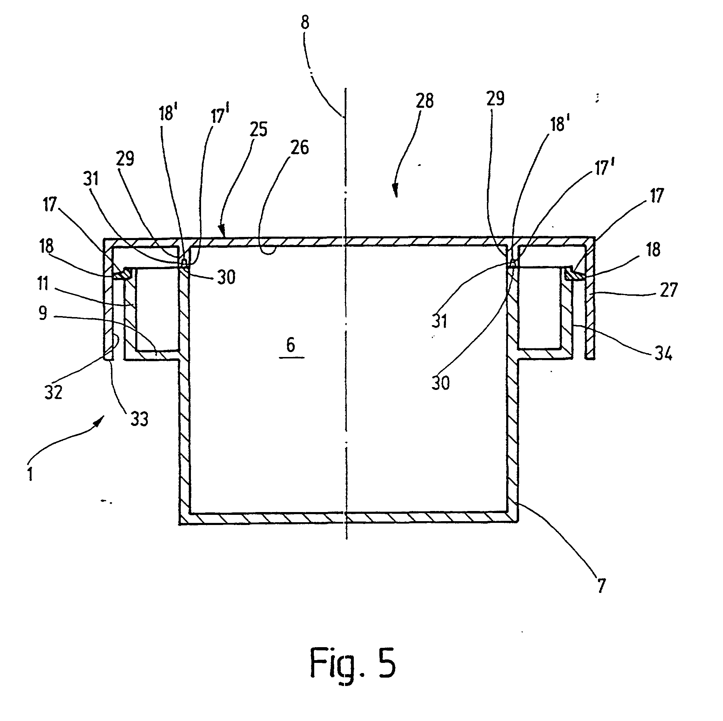

Wird bei der Montage (siehe auch stark schematisiert in Figur 5) die Abdeckung 25 auf das Grundgehäuse 1 aufgesetzt, so übergreift der Rand 27 die Seitenwandung 11. Im Zuge dieses Zusammensteckens streift die Endkante 18 der radialen Dichtung 17 an der Innenseite 32 des Randes 27 entlang. Die Dichtung 17 liegt in der Endphase des Zusammensteckens in einer von der Stirnseite 33 des Randes 27 entfernten Position an der Innenseite 32 an und übt eine sichere Abdichtung aus. Die Abdeckung 25 wird mit geeigneten Befestigungsmitteln, vorzugsweise mit Rastmitteln, sicher an dem Grundgehäuse 1 gehalten. Im vollständig zusammengesteckten Zustand von Abdeckung 25 und Gehäuse 1 tritt die Endkante 18' der axialen Dichtung 17' in die nutartige Vertiefung 31 an der Stirnseite 30 der Wandung 29 ein und legt sich dort fest an, so daß auch dort eine sichere Abdichtung erzielt ist.

Eine sichere Abdichtung bieten überdies die Kabeldurchführungs-Ausfüllung 21 (Figuren 14,15) sowie die Schraubenloch-Ausfüllungen 23 (Figur 11). Der Kunststoff 24 ist derart in die Schraubenlöcher 22 eingebracht, damit sich eine Art Hohlzylinder 54 ergibt. Der Hohlzylinder 54 weist einen umlaufenden Rand 55 auf, der sich auf der Innenseite des Bodens 9 des Gehäuses 1 abstützt. Der Hohlzylinder 54 ragt mit seiner Höhe H bis über die Unterseite des Bodens 9 hinaus. Er weist einen Aufnahmeraum 56 auf, der sich im Bereich des Randes 55 aufweitet. Dieser aufgeweitete Bereich 57 dient der sicheren und damit abdichtenden Aufnahme des Kopfes einer Schraube, beispielsweise einer Senkkopfschraube, die der Befestigung des Gehäuses 1 auf einer Unterlage dient. Gegenüberliegend dem Bereich 57 ist der Hohlzylinder 54 mit einem Boden 58 verschlossen, damit im "unbenutzten" Zustand der Schraubenlöcher 22 kein Wasser in das Innere des Gehäuses 1 eindringen kann. Soll ein Schraubenloch 22 von einer Befestigungsschraube durchdrungen werden, so wird diese durch den Boden 53 des Hohlzylinders 54 gedrückt, das heißt, der Kunststoff 24 wird nicht entfernt, sondern lediglich von dem Schraubenschaft durchdrungen, wodurch eine optimale Dichtwirkung erzielt ist und dennoch die Schraubenbefestigung nicht behindert wird. Soll ein Kabel durch die Kabeldurchführungs-Ausfüllung 21 gelegt werden, so kann der Kunststoff 24 aufgrund von kreisförmig angeordneten Einkerbungen 50, die als Sollbruchstellen ausgebildet sind, in gewünschter Weise entfernt werden. Es dürfen allerdings nur so viele "Ringe" entfernt werden, damit das Kabel dichtend an dem Kunststoff 24 anliegt. In den Figuren 14 und 15 sind zwei Varianten von Einkerbungen 50 und 50' gezeigt. Die in Figur 14 gezeigte Kabeldurchführung 20 ist mit den bereits erwähnten Einkerbungen 50 versehen, die beidseitig der Kabeldurchführung 20 angeordnet und somit leicht zu entfernen sind. Die in Figur 15 gezeigte Kabeldurchführung 20 ist mit den Einkerbungen 50' versehen, die eine Variante gegenüber den in Figur 14 gezeigten Einkerbungen 50 darstellen, die nur an einer Seite der Kabeldurchführung 20 angeordnet sind, und die -um ein leichtes Entfernen zu gewährleisten- tiefer als die Einkerbungen 50 ausgebildet sind.

Es wurde vorstehend lediglich von einer Kabeldurchführung 20 im Grundgehäuse 1 ausgegangen, die Erfindung ist darauf jedoch nicht beschränkt. Es können daher weitere erfindungsgemäß ausgestaltete Kabeldurchführungen 20 am Ventilatorgehäuse vorgesehen sein.

Ferner zeigt die Figur 12, daß Sacklochbohrungen 59 -von der Unterseite her betrachtet- im Boden 9 vorgesehen sind, die mit dem Kunststoff 24 ausgespritzt sind. Die somit entstandenen Abstandshalter 51 weisen einen umlaufenden Ring 60 auf, der sich an der Unterseite des Bodens 9 abstützt. Die Höhe des Ringes 60 ist mit h gekennzeichnet und entspricht der Höhe H des Hohlzylinders 54 in Figur 11. Abstandshalter 51 sind dann einzusetzen, wenn beispielsweise zur Befestigung des Grundgehäuses an einer Wand zwei Schraubenloch-Ausfüllungen 23 diagonal gegenüberliegend im Boden 9 angeordnet sind. Um ein "Kippeln" des Grundgehäuses zu vermeiden, werden die Abstandhalter 51 in den beiden noch verbleibenden "Ecken" des Bodens 9 angeordnet.

In Figur 13 ist eine Durchgangs-Bohrung 52 gezeigt, die mit Kunststoff 24 derart ausgefüllt ist, daß ein Hohlzylinder 61 entsteht. Der Hohlzylinder 61 ist mit einem Boden 62 verschlossen. Soll diese Bohrung 52 von einem elektrischen Bauteil, beispielsweise einem Feuchte-Fühler, durchdrungen werden, so wird dieses durch den weichen Kunststoff 24 des Bodens 62 gedrückt. Dadurch, daß der Kunststoff 24 nicht entfernt, sondern von dem Bauteil lediglich durchdrungen wird, ist eine optimale Dichtwirkung erzielt.

## Patentansprüche

1. Verfahren zum Herstellen eines Ventilatorgehäuses im Kunststoff-Spritzverfahren, **dadurch gekennzeichnet,** daß an das aus einem ersten, relativ festen Kunststoff (2) gespritzte Ventilatorgehäuse (1,25) ein zweiter, elastisch nachgiebiger Kunststoff (24) zur Ausbildung mindestens eines Weichteils (17,17',17'',21, 23) mittels eines Zweikomponenten-Spritzverfahrens angespritzt wird, bei dem in einem Arbeitsgang mit einem Werkzeug beide Spritzvorgänge durchgeführt werden.

2. Verfahren nach Anspruch 1, **dadurch gekennzeichnet,** daß als Weichteil mindestens eine Dichtung (17,17',17") und/oder eine Schraubenloch-Ausfüllung (23) und/oder eine Kabeldurchführungs-Ausfüllung (21) angespritzt wird.

3. Gehäuse für einen Ventilator, mit einem Grundgehäuse und einer mindestens eine Lufteintritts- oder Luftaustrittsöffnung (28) aufweisenden Abdeckung (25), wobei Grundgehäuse (1) und Abdeckung (25) im Kunststoff-Spritzverfahren hergestellt sind, da**durch gekennzeichnet,** daß am Grundgehäuse (1) und/oder Abdeckung (25) in einem weiteren Spritzverfahren mindestens ein Kunststoff-Weichteil als Dichtung (17,17',17") und/oder Schraubenloch-Ausfüllung (23) und/oder Kabeldurchführungs-Ausfüllung (21) durch ein Zweikomponenten-Spritzverfahren angespritzt ist.

4. Gehäuse nach Anspruch 3, **dadurch gekennzeichnet**, daß die Abdeckung (25) eine Frontplatte (26) aufweist, von der ein abgewinkelter, umlaufender Rand (27) ausgeht, der eine umlaufende Seitenwandung (11) des Grundgehäuses (1) beim Zusammenstecken von Abdeckung (25) und Grundgehäuse (1) überfängt, wobei an der Innenseite (32) des Randes (27) und/oder an der Außenseite (34) der Seitenwandung (11) die Dichtung (17) angespritzt ist, deren freie Endkante (18) quer, insbesondere senkrecht, zur Zusammensteckrichtung von Abdeckung (25) und Grundgehäuse (1) verläuft.

5. Gehäuse nach einem der vorhergehenden Ansprüche, **dadurch gekennzeichnet,** daß die Lufteintritts- oder Luftaustrittsöffnung (28) der Abdeckung (25) und/oder ein ihr zugeordneter Luftkanal (6) des Grundgehäuses (1) von einer angespritzten Dichtung (17') umrahmt ist, deren freie Endkante (18') in Zusammensteckrichtung weist.

6. Gehäuse nach Anspruch 5, **dadurch gekennzeichnet,** daß sich die Dichtung (17') auf einer Stirnseite (16) einer Luftkanalwandung (5) des Grundgehäuses (1) befindet.

7. Gehäuse nach einem der vorhergehenden Ansprüche, **dadurch gekennzeichnet**, daß das Grundgehäuse (1) einen zentralen Aufnahmeschacht (3) für einen Elektromotor aufweist, der mittels eines aufsteckbaren Deckels (13) verschlossen ist, wobei an der Innenwand (19) des Aufnahmeschachtes (3) und/oder an dem Seitenrand (15) des Deckels (13) eine Dichtung (17'') angespritzt ist, deren freie Endkante quer, insbesondere senkrecht, zur Steckrichtung des Dekkels (13) verläuft.

## Claims

1. A method of manufacturing a fan housing by plastics injection moulding, **characterised in that** onto the fan housing (1, 25) injection-moulded from a first, relatively hard plastics (2) is injection-moulded a second, resiliently yieldable plastics (24) by means of two-component: injection moulding to form at least one soft part (17, 17', 17", 21, 23), wherein the two injection-moulding processes are carried out in a single operation using a single tool.

2. A method according to claim 1, **characterised in that** at least one seal (17, 17', 17") and/or a screw-hole lining (23) and/or a cable-duct lining (21) is injection-moulded on as a soft part.

3. A housing for a fan, comprising a main housing and a cover (25) having at least one air-inlet or air-outlet opening (28), wherein the main housing (1) and the cover (25) are manufactured by plastics injection moulding, **characterised in that**, in a further injection-moulding process, at least one plastics soft part is injection-moulded onto the main housing (1) and/or the cover (25) by means of two-component injection moulding to form a seal (17, 17', 17") and/or a screw-hole lining (23) and/or a cable-duct lining (21).

4. A housing according to claim 3, **characterised in that** the cover (25) has a front plate (26), from which extends a circumferential dropped edge (27) overlapping a circumferential side wall (11) of the main housing (1) when the cover (25) and the main housing (1) are assembled, the seal (17) being injection-moulded onto the inside (32) of the edge (27) and/or the outside (34) of the side wall (11), and the free end edge (18) of the seal (17) extending transversely, in particular perpendicularly to the assembly direction of the cover (25) and the main housing (1).

5. A housing according to any one of the preceding claims, **characterised in that** the air-inlet or air-outlet opening (28) of the cover (25) and/or an associated air duct (6) of the main housing (1) is surrounded by an injection-moulded seal (17'), the free end edge (18') of which points in the assembly direction.

6. A housing according to claim 5, **characterised in that** the seal (17') is arranged on an end (16) of an air-duct wall (5) of the main housing (1).

7. A housing according to any one of the preceding claims, **characterised in that** the main housing (1) has a central mounting shaft (3) provided for an electric motor and closed by means of a push-on lid (13), a seal (17") being injection-moulded onto the inner wall (19) of the mounting shaft (3) and/or the lateral edge (15) of the lid (13), and the free end edge (18) of the seal (17") extending transversely, in particular perpendicularly to the push-on direction of the lid (13).

## Revendications

1. Procédé de fabrication d'un boîtier de ventilateur par injection de matière plastique,
**caractérisé en ce qu**'
on injecte une seconde matière plastique (24) souple, élastique, sur un premier boîtier de ventilateur (1, 25) injecté en une matière plastique (2) relativement rigide, pour former au moins une partie souple (17, 17', 17", 21, 23) par un procédé d'injection à deux composants selon lequel on effectue les deux injections au cours d'une opération avec un outil.

2. Procédé selon la revendication 1,
**caractérisé en ce que**
comme partie souple, on injecte au moins un joint (17, 17', 17") et/ou un remplissage de trou de vis (23) et/ou un remplissage de passage de câble (21).

3. Boîtier de ventilateur composé d'un boîtier de base et d'un couvercle (25) muni d'au moins une ouverture d'entrée ou de sortie d'air (28), le boîtier de base (1) et le couvercle (25) étant fabriqués par injection de matière plastique,
**caractérisé en ce qu**'
au cours d'une autre opération d'injection, on injecte sur le boîtier de base (1) et/ou sur le couvercle (25), au moins une partie souple en matière plastique comme joint (17, 17', 17") et/ou comme remplissage de trou de vis (23) et/ou comme remplissage de passage de câble (21) par un procédé d'injection à deux composants.

4. Boîtier selon la revendication 3,
**caractérisé en ce que**
le couvercle (25) comporte une plaque frontale (26) se poursuivant par un bord (27) périphérique, recourbé, qui déborde d'une paroi latérale périphérique (11) du boîtier de base (1) lors de l'assemblage du couvercle (25) et du boîtier de base (1 ),
et sur le côté intérieur (32) du bord (27) et/ou sur le côté extérieur (34) de la paroi latérale (11), on injecte le joint (17) dont l'arête d'extrémité libre (18) est transversale, notamment perpendiculaire, à la direction d'engagement entre le couvercle (25) et le boîtier de base (1).

5. Boîtier selon l'une des revendications précédentes,
**caractérisé en ce que**
l'ouverture d'entrée ou de sortie d'air (28) du couvercle (25) et/ou un canal d'air (6) associé du boîtier de base (1) sont entourés par un joint injecté (17') dont l'arête d'extrémité libre (18') est dirigée dans la direction de l'engagement.

6. Boîtier selon la revendication 5,
**caractérisé en ce que**
le joint (17') se trouve sur une face frontale (16) d'une paroi de canal d'air (5) du boîtier de base (1).

7. Boîtier selon l'une des revendications précédentes,
**caractérisé en ce que**
le boîtier de base (1) comporte une cavité de réception (3) centrale pour un moteur électrique, cette cavité étant fermée par un couvercle enfichable (13), et la paroi intérieure (19) de la cavité (3) et/ou la paroi latérale (15) du couvercle (13) comportent un joint (17") réalisé par injection, dont l'arête d'extrémité libre est dirigée transversalement notamment perpendiculairement à la direction d'enfichage du couvercle (13).
